# EUROPEAN PATENT APPLICATION

(11) **EP 4 530 080 A1**
(43) Date of publication of application: **02.04.2025**
(21) Application number: 23200589.2
(22) Date of filing: 28.09.2023
(51) Int. Cl.: B41J 11/00, B41M 7/00

(54) **INKJET PRINTING OF ELEVATED STRUCTURES**

(71) Applicant: Canon Production Printing Holding B.V., 5914 HH Venlo (NL)
(72) Inventor: DE JONGH, Frederique D. M., Venlo (NL); VAN GEEL, Wetse F. M., Venlo (NL); BASTEN, Paul J. H., Venlo (NL); BRUENNER, Marvin P., Venlo (NL)
(74) Representative: Canon Production Printing IP Department

(57) **Abstract**

A method of inkjet printing an elevated structure on a print medium which comprises the steps of depositing radiation curable marking material on the print medium, such that an array of spaced apart drops is formed, curing said spaced apart drops by irradiating the drops, forming the drops into a plurality of spaced apart, out-of-plane structures by repeatedly depositing a further drop of radiation curable marking material on each drop and curing the further drops, thereby adhering the further drops to the drop, wherein each repetition increases a height of the structures with respect to the surface. A backlight is provided behind the print medium to realize visual effects for an observer on the front side.

## Description

### BACKGROUND OF THE INVENTION

### 1. Field of the invention

The invention relates to a method of inkjet printing an elevated structure on a print medium, a scanning inkjet printer, and a computer program. The method of inkjet printing an elevated structure on a front side of a print medium comprises the steps of depositing radiation curable marking material on a surface, such that an array of spaced apart drops is formed, curing said spaced apart drops by irradiating the drops, forming the drops into a plurality of spaced apart, out-of-plane structures by repeatedly depositing a further drop of radiation curable marking material on each drop and curing the further drops, thereby adhering the further drops to the drop, wherein each repetition increases a height of the structures with respect to the surface, wherein upon completion each structure a pillar is formed by drops stacked on top of another.

### 2. Description of Background Art

It is known from e.g. US 10281904 B2 to print three-dimensional structure using a scanning inkjet printer. Such a scanning inkjet printer comprises a printhead carriage comprising at least one printhead for jetting onto a print medium on a medium support surface. The printhead carriage is reciprocally translatable over the medium support surface in a scanning direction, which is perpendicular to a transport direction, wherein the print medium is moved with respect to a support beam along which the printhead carriage translates. The latter may be achieved by moving the print medium and/or the support beam in the transport direction. The printhead is configured to jet marking material, such as ink (colored or colorless), specifically a radiation curable ink. The radiation curable ink is jetted from nozzles on the printhead in the form of liquid droplets. A curing station, such an optical emitter, is provided for curing the droplets. The curing station emits light at least within a predetermined range determined by the marking material, thereby inducing a chemical reaction within one or more components in the marking material, causing the marking material to harden and become fixed onto the print medium. Three-dimensional structures are formed by repeatedly and selectively depositing layers of marking material on top of one another. Each layer is generally cured before adding another on top of it. Thus a hard and/or rigid three-dimensional print can be created.

Currently there is a large demand for creating visual effects for the graphic arts market.

Currently, there are technical limitations in the sense that within one print, colour is the only information perceived via reflection of light. In order to create interaction with colour, a light source must be adapted or one must make use of multiple prints.

### SUMMARY OF THE INVENTION

It is an object of the invention to provide an alternative method of printing three-dimensional structure, specifically one suited for forming elevated structures on a print medium with special visual effects.

In accordance with the present invention, each pillar is positioned substantially free from other pillars so that empty spaces in-between pillars are created and light from a backlight positioned at a backside of the print medium is able to traverse from the backside through the print medium and said empty spaces towards a viewpoint of an observer at the frontside of the print medium opposite to the backside of the print medium and the method comprises the step of specifying for each pillar a height with respect to the surface, a cross-sectional width of the pillar taken parallel to the plane of the surface, an angle of the pillar with respect to the plane of the surface, and at least one colour of the radiation curable marking material in order to establish a predetermined visual effect of the elevated structure, the predetermined visual effect intended to be sensed by the observer.

By doing so, the present invention adds a dimension to applications by means of different kind of densities wherefor with one light source, multiple effects can be perceived.

According to an embodiment the predetermined visual effect varies with a position of the viewpoint of the observer relative to the surface.

According to an embodiment the method comprises the step of dividing the surface into at least two parts and providing for each part a density of the pillars in said part in order to establish a relation between the size of an area occupied by the pillars in said part and a size of the empty spaces in-between the pillars in said part.

According to an embodiment the method comprises the step of dividing the surface into at least two parts and providing for each part a different specification of the pillars to be realized in said part. The number of parts may be large in order to simulate a gradual change in density.

According to an embodiment the method is executed by a scanning inkjet printer having a user interface, wherein the method comprises the steps of displaying on the user interface a selection list of predetermined visual effects, selecting a predetermined effect from the selection list and converting the selected predetermined visual effect into specifications of the pillars.

According to an embodiment the method further comprises the steps of selecting a structure height parameter corresponding to a height of the structures after printing, comparing a droplet size parameter corresponding to a dimension of the to be applied droplets to the structure height parameter to determine a number of passes, defining a number of masks at least equal to the number of passes of a scanning printhead, wherein each mask defines a plurality of spaced apart structure formation areas, each structure formation area comprises at least one printing pixel and said structure formation area is surrounded by non-printing pixels, preferably wherein the masks are identical, and applying one of the mask per pass.

The present further relates to a scanning inkjet printer comprising a translatable printhead carriage translatable over a medium support surface and comprising at least one printhead comprising nozzles for jetting droplet of UV curable marking material onto a print medium on the medium support surface, a curing station configured for emitting UV radiation for curing marking material on the print medium on the medium support surface, a controller configured for operating in an elevated structure print mode to define a plurality of spaced apart structure formation areas on the print medium with respect to the medium support surface, to control the printhead to jet at least one droplet from the at least one nozzle onto each structure formation area during multiple passes of the printhead, wherein for every droplet jetted onto a structure formation area, the position, velocity, and moving direction of each nozzle with respect to a structure formation area when jetting a droplet in said structure formation area are similar and/or the same, and to control the curing station to cure the jetted droplets during each pass of the printhead, such that in substantially each structure formation area a pillar is formed, wherein each pillar is positioned substantially free from other pillars so that empty spaces in-between pillars are created and light from a backlight positioned at a backside of the print medium is able to traverse from the backside through the print medium and said empty spaces towards a viewpoint of an observer at the frontside of the print medium opposite to the backside of the print medium, wherein the controller is configured to specify for each pillar a height with respect to the medium support surface, a cross-sectional width of the pillar taken parallel to the plane of the medium support surface, an angle of the pillar with respect to the plane of the medium support surface, and at least one colour of the radiation curable marking material in order to establish a predetermined visual effect of the formed pillars, the predetermined visual effect intended to be sensed by the observer.

The present invention further relates to a computer program comprising instructions which, when the program is executed by a computer, cause the computer to carry out the steps of the method of the present invention.

The present invention further relates to a print medium with an elevated structure formed by performing the method according to the present invention.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
- Fig. 1: is a schematic representation of a scanning inkjet printer;
- Figs. 2A to 2F: illustrate different steps of a method of printing elevated structures;
- Fig. 3: is a schematic, side view of a structure printed via the method in Figs. 2A to 2F;
- Fig. 4: is a first embodiment of a print mask that may be applied in the method in Figs. 2A to 2F;
- Fig. 5: is a second embodiment of a print mask that may be applied in the method in Figs. 2A to 2F;
- Fig. 6: is a scanning electron microscopic image of structures printed using the method in Figs. 2A to 2F;
- Fig. 7A - 7B: are schematic representations of an image to illustrate the areas for each of which pillars are specified with different specifications;
- Fig. 8: is a flow diagram of an embodiment of the method according to the present invention; and
- Fig. 9: is a schematic diagram of a non-transitory software medium according to the present invention.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

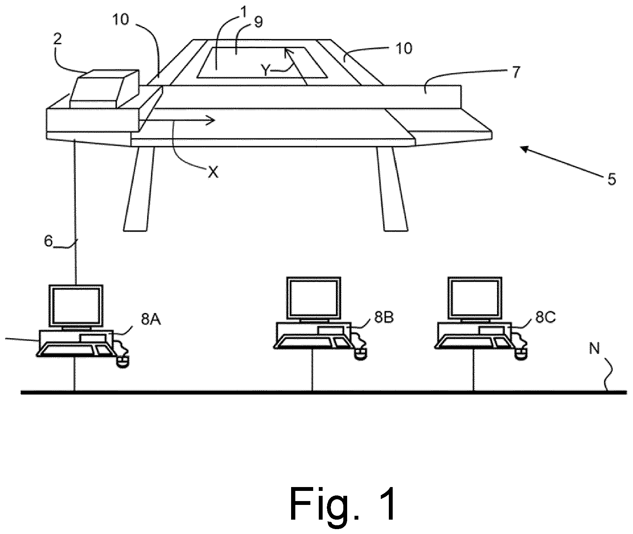

Fig. 1 is a print system comprising a number of workstations 8B and 8C, which may be personal computers or other devices for preparing colour image data for three dimensional objects to be printed. These workstations have access to a network N for transferring the colour image data to a print controller 8A that is configured to receive print jobs for three-dimensional objects consisting of voxels and derive pass images for each pass of the print engine 2 over the print medium support surface 1 of the flatbed. A print medium 9 is supported on the print medium support surface 1 facing the print engine 2 during printing. The print system comprises the print engine 2 for applying colorants, in this embodiment cyan (C), magenta (M), yellow (Y), black (K) and white (W) colorant, to a flat print medium 9, the substrate, in order to obtain a printed object. In this embodiment a UV-curable material is applied by printheads that reciprocally scan the substrate in a movement direction X perpendicular to a transport direction Y by means of a gantry 7. A curing station is provided to solidify the marking material after printing on the substrate by exposing it to UV-radiation and/or UV light. The radiation preferably has a wavelength between or around 10 and 400 nm. Other types of marking materials or pre-treatment materials, such as primers, may further be applied within the present invention. It will further be appreciated that the present invention may be applied to any scanning inkjet printer, which includes a flatbed printer as shown in Fig. 1 as well as roll, web, sheet, rigid, and/or hybrid printers, wherein the print medium 9 is transported perpendicular to the scanning direction X, preferably between passes of the printheads. In another example, a stationary page-wide printhead array with parallel rows of printheads may be applied, so that the structures may be formed in a single pass as well. The curing station (not shown) may be incorporated in the same carriage as the printhead or be provided on a separate support. The curing station may be movable or entirely stationary.

Preferentially the distance between the flat substrate and the print elements that are used to apply the various colorants, is variable. This distance may be varied in order to keep the upper surface of the object within the latitude of the print elements. The latitude of the distance between a substrate of the scanning printhead is in print engine 2 about 0.5 to 2 mm.

The printer comprises a user interface (not shown), which is placed on the print engine, but which may also be part of the printer controller 8A, for selecting a print job and optionally adapt a print job parameter, such as an absolute height parameter for indicating a maximum height of the object to be printed. A maximum number of voxels in the height direction perpendicular to the substrate may be used as height parameter. According to an embodiment the user interface is configured to display a selection list of predetermined visual effects. The user may select a predetermined effect from the selection list. The print controller converts the selected predetermined visual effect into specifications of the pillars according to the present invention. A user interface may be provided as a network site that is accessible with a browser on a client computer.

After sending a print job comprising image data from a workstation to the printer controller, the print job will be made visible on the user interface. It may be scheduled for further processing after selection from a list of print jobs or, alternatively, if the print job is on top of the list of print jobs. The print job comprises parameter values that determine the way the image data are to be printed, such as the way how the image data are to be converted into print data. The print job comprises specifications for each pillar to be printed: a height with respect to the substrate, a cross-sectional width of the pillar taken parallel to the plane of the substrate, an angle of the pillar with respect to the plane of the substrate, and at least one colour of the radiation curable marking material in order to establish a predetermined visual effect of the elevated structure. The predetermined visual effect intended to be sensed by the observer.

### Inkjet printing of elevated structures

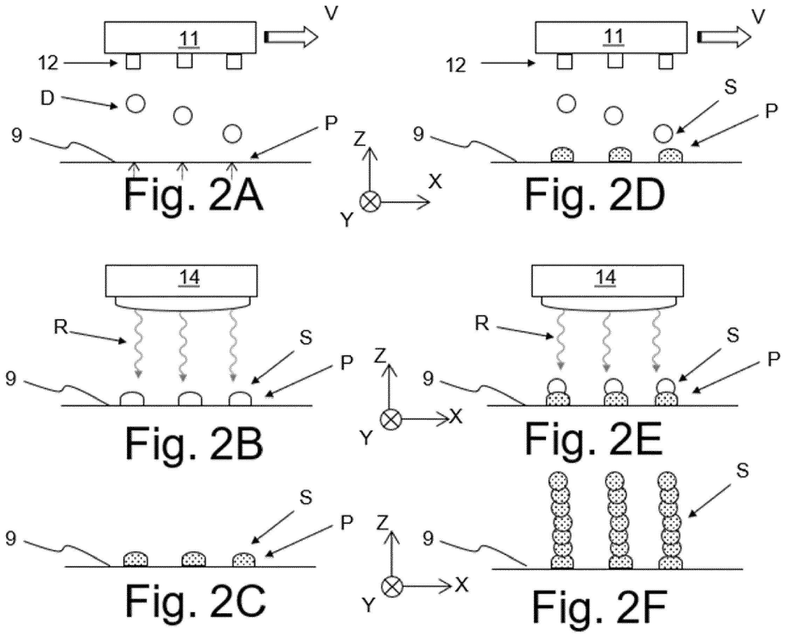

Figs. 2A to 2F illustrates different steps of a method to print elevated structures on a print medium 9. The print medium 9 is supported on the print medium support surface 1, such that a side of the print medium 9 faces the nozzles 12 of the printhead 11 during printing. The print medium 9 may be any suitable type of material(s), such as paper, plastic or metal foils, banners, sheets, rigids, webs, textiles, etc.

In Fig. 2A, the printhead 11 moves in its scanning direction X over the stationary print medium 9. The printhead 11 may be any suitable type of printhead, for example the printhead as described in US 10391768 B2. The nozzles 12 jet a plurality of droplets D of a UV-curable marking material onto the print medium 9. Each nozzle 12 is provided with a respective actuator (not shown) to jet a droplet D from said nozzle 12. Each actuator is controlled to jet its droplet D at a predetermined position P on the print medium 9. Therein, the relative position and velocity of each nozzle with respect to the respective position P has been taken into account. In Fig. 2A, during this pass of the printhead 11 each nozzle 12 jets a droplet D, such that these droplets D are positioned at a non-zero distance from one another on the print medium 9, as shown in Fig. 2B. It will be appreciated that the print medium 9 is Fig. 2A may have been treated with (pre)printing or processing prior to the step shown in Fig. 2A. For example, a primer and/or one or more initial layers of marking material may have been provided on the print medium 9 to provide a surface with suitable adhesion for the marking materials applied in Figs. 2A to 2C.

Fig. 2B shows that after jetting, the droplets D form spaced apart structures-in-formation S on the print medium 9 after deposition. The distance between the structures-in-formation S is sufficiently great, so that coalescence of neighboring structures-in-formation S is prevented. It will be appreciated that one or more droplets D may be deposited per position P per pass of the printhead 11 to contribute to the respective drop for forming the respective structure-in-formation S. Multiple droplets D deposited at the same position P during a single pass are deposited in close enough proximity, such that these coalesce together into a single drop. In Fig. 2B, the jetted droplets D of marking material are exposed to radiation from a curing station 14. The radiation, in this example UV light, triggers a photochemical reaction in the jetted marking material, which results in the hardening and fixation of the jetted droplets D. This process is commonly referred to as 'curing'. In Fig. 2B, the jetted droplets D were deposited directly on the print medium 9, so that by curing the jetted marking material the initial bases of the structures-in-formation S are hardened and fixed to the print medium 9, as shown in Fig. 2C.

In Fig. 2D, the printhead 11 passes over the print medium 9 during a second pass in the scanning direction X. The nozzles 12 are then activated again to jet further droplets D onto the cured, hardened bases of the structures-in-formation S. Based on the velocity and relatively position of a nozzle 12 with respect to a position P, a release timing is determined at which moment a droplet D is released from a respective nozzle 12, so that said droplet D lands on the structure-in-formation S at the intended position P. In a basic example, during every pass the relative position of a nozzle 12 with respect to the to be jetted position P is the same, while the velocity of the printhead 11 is kept constant. Corrections may be applied to compensate for the increasing height of the structures-in-formation S. As such, one or more droplets D of UV-curable marking material are deposited on top of the bases of the structures-information S. The amount of marking material deposited per position P, e.g. the number and/or (total) volume of droplets added per pass per structure-in-formation is preferably sufficiently small, so that the added marking material for its total or major part resides on top of the respective structure-in-formation S. Thereby, the height of the structures-in-formation S is increased incrementally.

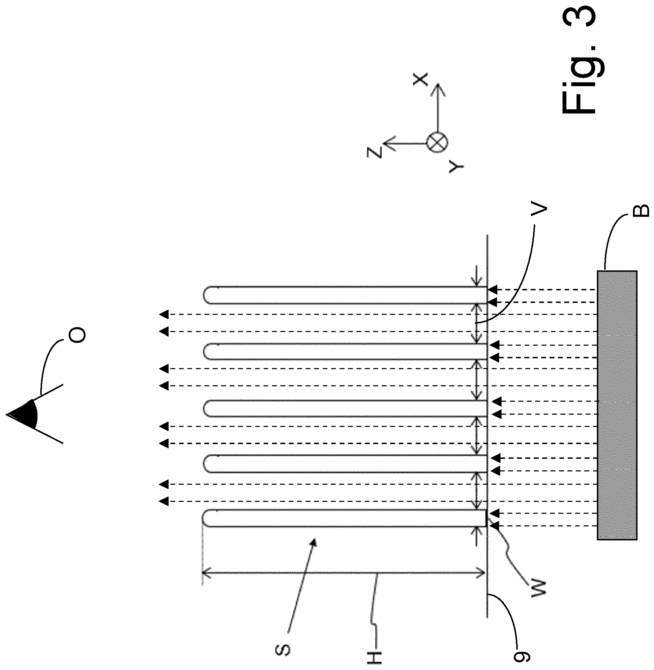

Subsequently, as shown in Fig. 2E, the added marking material is cured by means of the curing station 14. The droplets D added on top of each structure-in-formation S are hardened and fixed to the underlying bases, which were formed in Figs. 2A to 2C. This process of adding one or more droplets D to the top of each structure-in-formation S followed by curing the added marking material by means of UV radiation is then repeated a number of times to create three-dimensional, pillar-shaped structures S, as shown in Fig. 2F. The structures S extend out-of-plane in the heigh direction Z with respect to the print medium 9 and are spaced apart from one another in a substantially contactless manner. It will be appreciated that when a large number of structures is applied in a dense manner, local deviations may lead to a small number of structures being in contact with one another. The structures S provide a visual sensation when a backlight is placed behind the print medium 9 - in drawings Fig. 2A - 2F below the print medium 9 - as will be explained with reference to Fig. 3.

### Elevated structures with backlight

Fig. 3 illustrate a number of structures S. Each structure S has a specified height H in Fig. 3, a specified cross-sectional width W parallel to the plane of the print medium 9 and a specific colour. Also the distance V between the structures S is specified. The specifications mentioned here-above are part of the print job which has been received by the print controller in order to instruct the print engine to print one or more images of the print job on the print medium 9. At the backside of the print medium 9 - in Fig. 3 below print medium 9 - a backlight B is positioned which light source is directed towards the print medium 9. Light beams from the light source B are traversing the print medium 9 and find their way between the pillars S upwards to the eye of the observer O.

By varying the height H, the width W, the colour and the angle of the pillar visual effects to be sensed by the observer O will be established. Providing a large number of such structures S in a dense configuration provides an elevated structure, with a special visual effect like glow, matte, glance, etc. In the example of Fig. 3, the structure S is formed as a thin pillar or needle. In another example, the structure S may be formed as a thin wall. A large number of parallel wall having light beams from a backlight B in-between the walls towards the observer O establish a different optical look.

In the example of Fig. 3, the structure S is formed of a single type of UV-curable marking material. The structure S was preferably formed using a marking material with a relatively high viscosity at room temperature. Preferably, the viscosity of the marking material is at least 100 mPa s, very preferably at least 200 mPa s, and even more preferably 500 mPa s at 20°C, as measured using an Anton Paar MCR 301 rheometer at shear rates (*γ̇*) of 100 s⁻¹. To facilitate easy jetting of the droplets D, the marking material may be heated before reaching the nozzles 12 of the printhead 11, such that the viscosity of the marking material is lowered, for example to less than 50 mPa s, preferably less than 20 mPa S, and even more preferably less than 10 mPa s in a temperature range between 45 and 60°C, at shear rates of 10 or 100 s⁻¹.

The marking material used for the structure S is preferably a gelling radiation curable inkjet ink. This ink comprises a gellant and a radiation curable component. Such an ink is described in e.g. US 10308825 B1 and/or WO 2007025893 A1 (which are herein incorporated by reference), specifically in the respective sections describing the composition of said inks. The gellant may in an embodiment be ester-based, while the radiation curable component may be of the group of epoxides and (meth)acrylates. (Meth-)acrylates may comprise one or more reactive groups for forming an acrylate polymer. An advantage of the gelling radiation curable inkjet ink is the great increase in its viscosity as a droplet of it lands on the print medium or structures-in-formation. The gelling radiation curable inkjet ink is preferably heated upstream of the nozzles to facilitate transporting and jetting of the gelling radiation curable inkjet ink. After jetting, the droplets gelling radiation curable inkjet ink cool down rapidly, such that the gellant crystallizes into relatively small crystal domains. This results in a rapid and large boost in viscosity.

The height H and width W of the structures S may be selected in accordance with the composition of the marking material. The height/width ratio H/W may be varied to achieve different sensations for the observer. Preferably, the height H of the structure S is at least multiple times its width W. However, currently the height and width of the pillars are limited by physical boundaries. Backlit applications may be envisioned where low pillars are next to high pillars, so that a height/width ratio varies within the same print.

### Printing method

The structures S are formed by iteratively depositing a drop of one or more droplets D of a marking material on top of a structure-in-formation S and curing the deposited marking material before adding the next drop. This requires that the drops are deposited precisely on top of the structures-in-formation S. In a simple example this may be achieved by keeping the printhead 11 stationary to the print medium 9 with a narrow distance between. In another, more costs effective embodiment, the printhead 11 moves with respect to the print medium 9, such a relatively large surface can be jetted by a single printhead 11. In a scanning inkjet printer 5, the printhead 11 moves reciprocally in the scanning direction X. Herein an example of a method for printing elevated structures on such a printer 1 will be described.

The process is initiated by the controller receiving elevated print job information, which triggers the printer 5 to be operated in an elevated structure printing mode when executing the corresponding print job. The elevated print job information defines in any suitable format a density of the structures S on the print medium 9 (e.g. numbers per unit area and/or a ratio of covered versus uncovered area), a height parameter for the structures (e.g. an average or maximum height in mm or µm), a marking material parameter (e.g. a colour), an angle of the structures towards the print medium 9. A standard density may be applied in case no specific density is prescribed by the elevated print job information. It will be appreciated that multiple, different marking materials may be applied in combination to form a single structure S, but the current example will be explained with reference to a single marking material. Processing the elevated print job information results in the selection of a marking material. e.g. based on colour. The controller has further stored for each marking material a droplet size parameter, corresponding to a volume of a droplet D of said marking material from a nozzle 12 of the printer 5. A value for the droplet size parameter may be determined by printing an elevated structure in a predetermined number of passes and dividing the final height of the structure by the number of passes and/or by measuring the drop volume or dimensions. The droplet size may vary dependent on other print process parameters, such as jetting speeds, temperature, etc. The controller may store a comprehensive look-up table which defines droplet height, sizes, and/or volumes across a variety of print process parameters. Additional, a cross-sectional dimension parameter for the structures S is determined or selected, for example a cross-sectional area or diameter measured perpendicular to the direction in which the height H is measured. The print job information may define a cross-sectional dimension parameter or the cross-sectional dimension parameter may follow from other process parameters. In the latter case, the cross-sectional dimension parameter may correspond to the area formed by a droplet D on the surface of the print medium 9, which has been previously determined and stored on the controller's memory.

The droplet size parameter is then compared to the height parameter to determine the number of passes of the printhead 11 for forming the structure S with the height H corresponding to the height parameter. Optionally, the controller may determine a number of individual droplets D which are deposited per pass onto a structure-in-formation S to together form a drop. In this example, a single droplet D will be jetted onto each structure-in-formation S during each pass (so each drop corresponds to a single droplet). The number of passes may then be determined by dividing the height H by a droplet height derived from the droplet volume or by calculating the volume of a structure using the cross-sectional dimension and height parameters and comparing that to the droplet size parameter. The determined number of passes is rounded to an integer value.

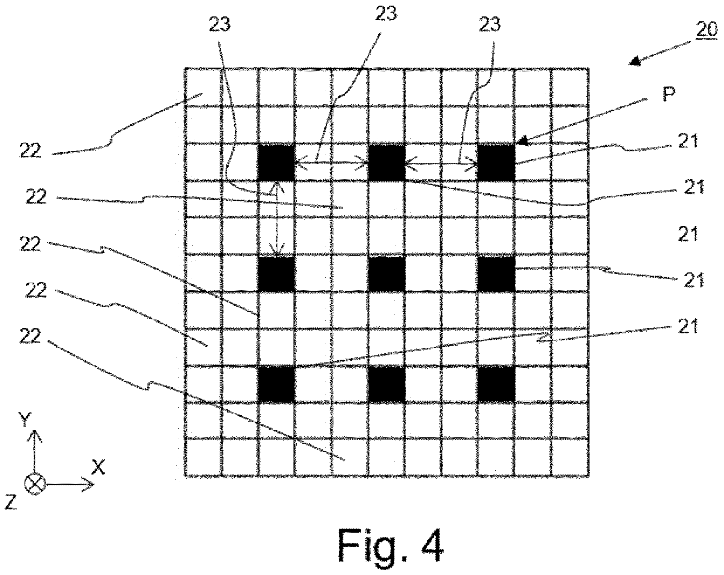

The controller further determines the printable area, which corresponds to the to-be-printed area of the print medium 9. The printable area is compared to the printer's resolution to determine a print mask 20, as illustrated in Fig. 4. The print mask 20 defines a pixel map, illustrated as a matrix in Fig. 4, wherein each pixel corresponds to an area of the print medium 9, e.g. roughly the area of an individual droplet on the print medium 9 (though shaped as a square). The darker printing pixels 21 correspond to areas where a droplet D is to be jetted during a pass of the printhead 11. The blank non-printing pixels 22 correspond to areas where no marking material is to be deposited during this pass. The distribution of printing pixels 21 corresponds in size and position to the structures S that are to be formed at the positions P. In Fig. 4, each printing pixel 21 defines a position P for forming a single structure S. In the example of Fig. 4, the printing pixels 21 are ordered in a square repeating pattern, but other patterns may be applied in order to achieve other visual effects.

In the example, in Fig. 4 the same print mask 20 is applied during each pass of the printhead 11 in the same direction. The printhead 11 scans in a forward, active direction X over the print medium 9 while jetting in accordance with the print mask 20. Droplets D are deposited at the position P, wherein each position P corresponds to a printing pixel 21. After jetting, the droplets D of jetted marking material are exposed to radiation R from the curing station 14. The jetted droplets D are thereby hardened into the bases of the structures-in-formation S. Parallel to and/or following the curing, the printhead 11 travels back in a reverse, passive direction opposite the active direction X, wherein the printhead 11 does not jet. After its return, the printhead 11 moves again in the forward, active direction X applying the same print mask 20. The droplets D are positioned at the same positions P, ensuring that the droplets D jetting during this pass land on top of the cured bases of the structures-in-formation S. Note that herein the printhead 11 is controlled to have the same or similar velocity during each forward pass. The controller may be configured to adjust for deviations in the velocity and or position of the printhead 11 during its forward pass by correcting the print mask 20. For example, in case the printhead velocity deviates to a lower value, the print mask 20 may be shifted opposite to the direction X of the printhead 11 to prevent the droplets D from early shooting their intended positions P. This print mask 20 is repeatedly applied again during each of the determined number of passes of the printhead 11, wherein the jetted marking material is cured between subsequent, forward passes. Every pass the structures-in-formation S are increased in height by a droplet D, which is cured and fixed to its underlying structure-in-formation S before a subsequent droplet D is added on top of it. During each or every certain number of passes, the controller may adjust the print mask to compensate for the height increase of the structures S. This may include shifting the print mask 20 in the direction of the printhead to compensate for the reducing distance between the top of the structures-in-formation S and the nozzles 12. Alternatively, the height and/or position of the printhead 11 may be adjusted as a corrective measure.

It will be appreciated that jetting of the printhead 11 may be applied during the forward and reverse motions of the printhead 11 as well. For example, a portion, e.g. half, of the printing pixels 21 in Fig. 4 may be consistently printed during the forward pass, while the remaining portion is printed during the reverse pass.

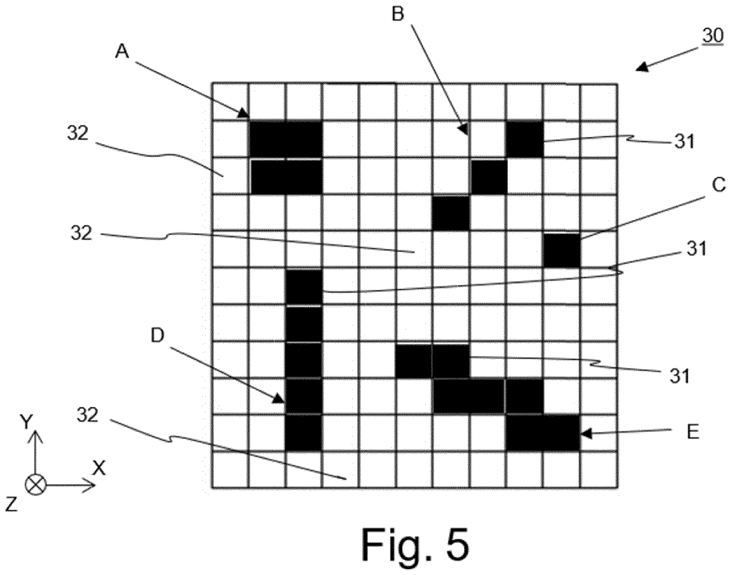

Fig. 5 illustrates a different print mask 30 that may be applied to generate elevated structures S, wherein structures S with different cross-sections are applied. In Fig. 5 most structures S are formed, such that their bases occupy multiple printing pixels 31. The area A for example is formed of four neighboring pixels that together form a square. In a single pass of the printhead 11 four droplets D are deposited close together in the area A to coalesce there into a drop. The coalesced marking material in area A is then cured to form the base of the structure-in-formation S in area A. The printhead 11 is then passed again over print medium 9, similar to as described with reference to Fig. 4. Four droplets D are then again jetted to their respective positions P in the area A. These droplets D land on top of the cured base of the structure-in-formation S, where they coalesce into a drop on top of the base. This drop of marking material is then cured again. The process is repeated to form a structure S having a cross-sectional width W of around two pixels instead of the single pixel structures S in Fig. 4. The structure S in area A has a different rigidness than the single pixel structure in area C, and provides a different observer view feedback.

Fig. 5 further illustrates other printing pixels grouped together to form walls in e.g. areas B, D, and E. The rigidness of a wall can be controlled by (locally) adjusting the thickness of the respective and/or how the droplets are allowed to coalesce. Walls also create a different visual effect dependent their direction.

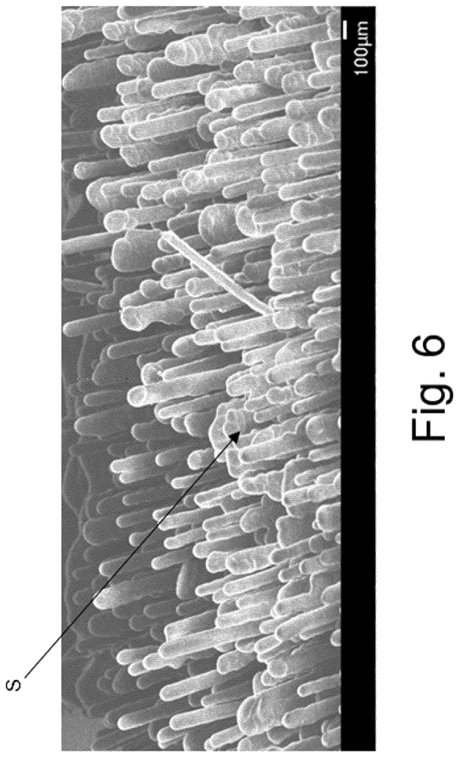

A scanning electron microscopic image of the elevated structures S is shown in Fig. 6. These structures S were obtained by the process described for Fig. 4. It is seen that the structures S are needle-like or pillar-shaped formations that extend out of the plane of the print medium 9. The structures S extend substantially parallel to one another with a certain variation caused by the physics of the printing process. The majority of the structures S are spaced apart from one another. The residual shape of the individual droplets D can still be seen in some the structures S. The structures S shown here were obtained by using the commercially available Canon UVgel 460 ink. A hundred passes were applied to deposit droplets on top of each other, wherein the droplets were cured every pass by a UV light source trailing the printheads. Printing was conducted mono-directionally with the same carriage velocity every pass. The temperature of the print surface was controlled to be 24°C. The print mode droplets was 300 x 900 dpi with 50% coverage per pass (50% possible voxels). The same halftone mask was applied every printing pass. Different nozzles 12 and marking materials may be applied to form a single structure S.

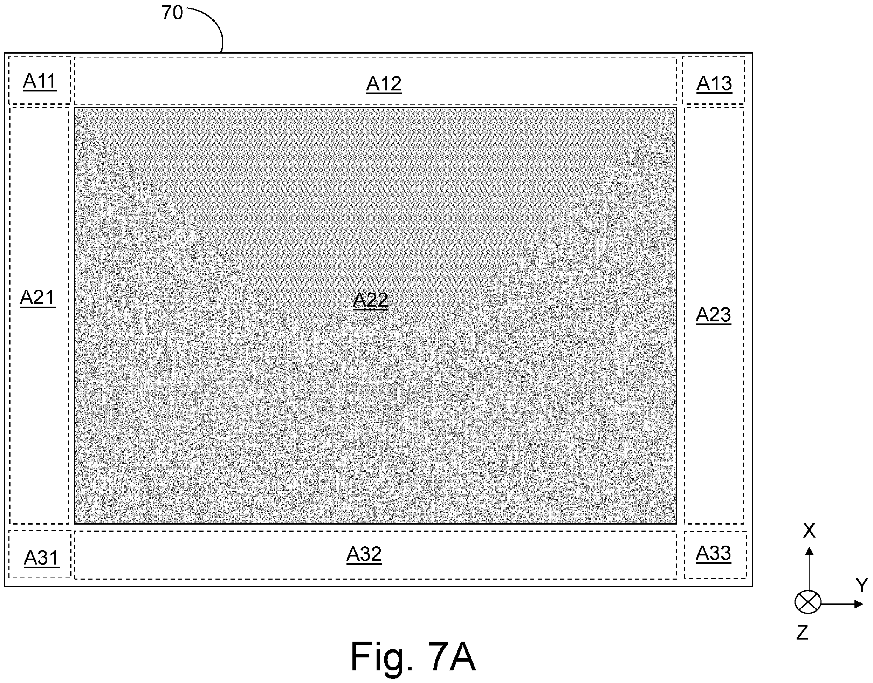

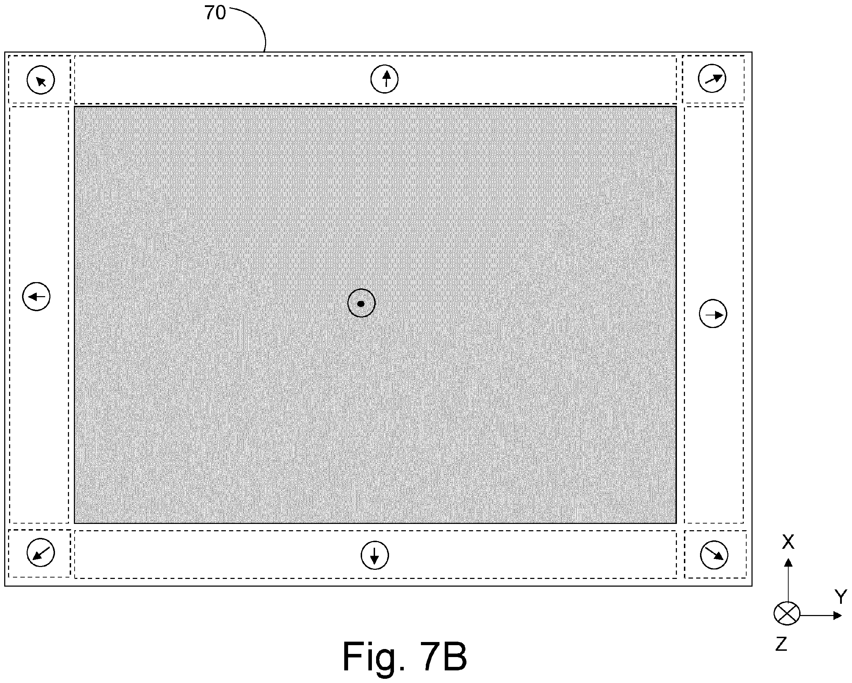

Fig. 7A shows a view of an image 70 which is segmented into a plurality of areas A11, A12, A13, A21, A22, A23, A31, A32, A33. For each of the area A 11 - A33, a specification of the pillars to be printed in the area is different. In particular, for each of the areas A11 - A33 a different angle of the pillars with respect to the plane of the print medium 9 is specified as shown in Fig 7B. For example, pillars in a middle area A22 have an angle of 90 degrees with respect to the plane of the print medium 9, i.e. the pillars are perpendicular to the plane of the print medium 9. The pillars will be printed as already shown in Fig. 3.

For the other areas A11, A12, A13, A21, A23, A31, A32, A33 the pillars have an angle other than 90 degree with respect to the plane of the print medium 9. For example, an angle of 80 degrees maybe envisioned. The preferred range of angles is from 50 to 90 degrees in order to overcome a fall over of the pillars. For each of the other areas also the direction of the pillar projected in the plane of the print medium 9 is different as indicated by the arrows in the circles in the other areas.

By doing so, the light beams in the middle area A22 will traverse straight to the observer O, while the light beams traversing through the other areas will be bent outwards. The visual effect for the observer O will be a "glowing" or "scattering" effect, i.e. bright effect, for the part of the image 70 corresponding to the middle area A22. The part of the image 70 corresponding to the other areas will show up a little bit less bright to the observer O. The positions of the drops being part of the slanted pillars and to be ejected in the subsequent layers for each of the other areas A11, A12, A13, A21, A23, A31, A32, A33 will be different due to the angles other than 90 degrees. Therefore, in contrary to the print mask of Fig. 4 which is used in each pass of the print head, the print mask for the image 70 will differ for each pass in the other areas A11, A12, A13, A21, A23, A31, A32, A33. The angle with respect to the plane of the print medium 9 and the length of the pillar may be given in three-dimensional polar ordinates ( 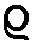 , φ, ϑ).

Another visual effect is achieved when the direction of the pillar in the plane of the print medium 9 is reversed for the other areas A11, A12, A13, A21, A23, A31, A32, A33, i.e. the direction is made opposite to the directions for the other areas A11, A12, A13, A21, A23, A31, A32, A33 shown in Fig. 7B. Since in this case light bundles from the other areas A11, A12, A13, A21, A23, A31, A32, A33 cross light bundles from the inner area A22, interference of the mentioned light bundles may occur. The interference of light may result in a blurring effect, a fading out effect, a fading away effect or an amplifying effect. Which one of the here-before mentioned effects occurs, depends on a difference in the lengths of the paths which the light follows through the inner area A22 and the other areas.

By means of pillars created by elevated printing according to the present invention, different light densities can be created which are intended to be sensed by the observer. The difference in densities is achieved by varying the length of the pillars in combination with their positions relative to each other. By means of these differences, effects with transmission, scattering and absorption of light are created. An advantage is a richer experience of applications, by expanding the possible color gamut when varying printing density and printed structures, and by expanding the reflective light effect as well as the absorbing light effect.

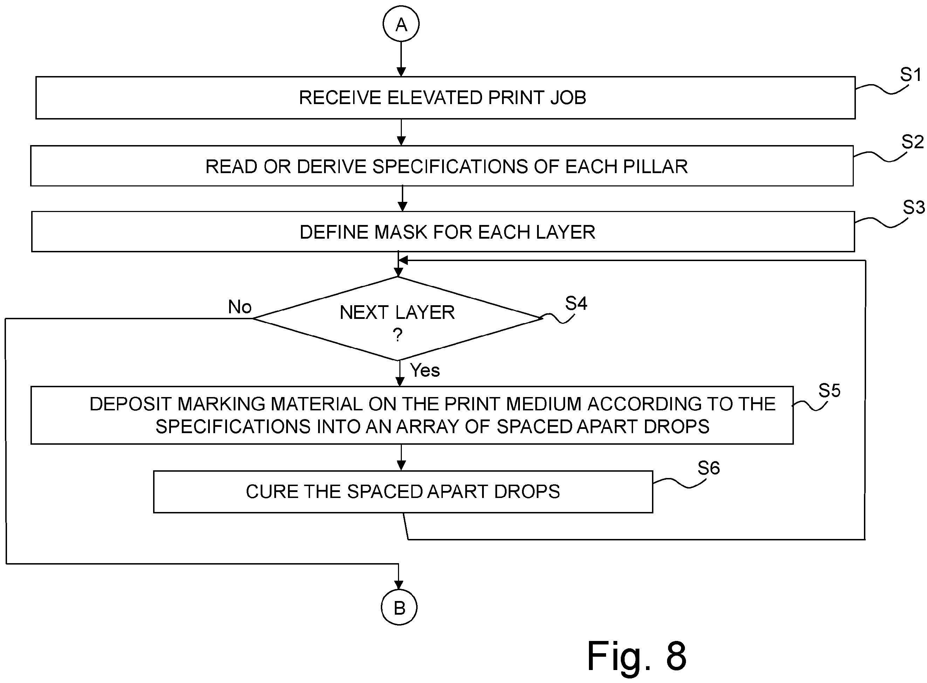

Fig. 8 is a flow diagram of the method according to the present invention. The method starts in a starting point A which leads to a first step S1.

In the first step S1 an elevated print job is received by the print controller.

In a second step S2 the specifications for each pillar to be formed is read or derived from the print job. For each pillar a height (H) with respect to the substrate, a cross-sectional width (W) of the pillar taken parallel to the plane of the substrate, an angle of the pillar with respect to the plane of the substrate, and at least one colour of the radiation curable marking material are specified in order to establish a predetermined visual effect of the elevated structure. The predetermined visual effect is intended to be sensed by the observer.

In a third step S3 for each layer a print mask is defined. The print mask is derived from the pillar specifications.

In a fourth step S4 it is checked if there are still any layers to be printed. If not, the method proceeds to an end point B of the method. If there are still layers to be printed, the method proceeds to a step S5.

In the fifth step S5 marking material is deposited on the print medium according to the specifications into an array of spaced apart drops.

In a sixth step S6 the spaced apart drops are cured. The method returns to the fourth step S4.

When all layers are deposited, the pillars are formed by drops stacked on top of another, wherein each pillar is positioned substantially free from other pillars so that empty spaces in-between pillars are created and light from a backlight positioned at a backside of the print medium is able to traverse from the backside through the print medium and said empty spaces towards a viewpoint of an observer at the frontside of the print medium opposite to the backside of the print medium.

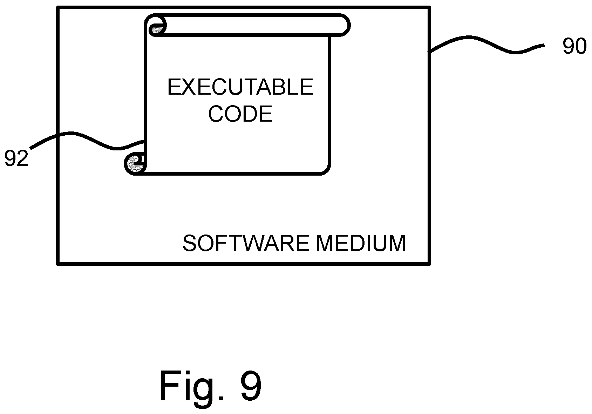

FIG. 9 schematically shows a non-transitory software medium 90 according to the invention. The software medium 90 comprises executable code 92 configured to, when executed, perform the method according to the invention, e.g. as described with respect to either the printing system 5 shown in Fig. 1 or the method of controlling the printing system 5 according to the present invention and/or according to any of the variants and modifications of the printing system 5 and/or of the method described herein.

The non-transitory software medium 90 may, specifically, be formed as a CD or a CD-ROM, a DVD or a DVD-ROM, a BluRay disc or a BluRay-ROM disc, a magnetic hard drive, a solid state disk (SSD) hard drive, a USB memory device and so on.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method of inkjet printing an elevated structure on a front side of a print medium (9), the method comprising the steps of
- depositing radiation curable marking material on a surface, such that an array of spaced apart drops is formed;
- curing said spaced apart drops by irradiating the drops ;
- forming the drops into a plurality of spaced apart, out-of-plane structures (S) by repeatedly depositing a further drop of radiation curable marking material on each drop and curing the further drops, thereby adhering the further drops to the drop, wherein each repetition increases a height of the structures (S) with respect to the surface, wherein upon completion each structure (S) a pillar is formed by drops stacked on top of another, wherein each pillar is positioned substantially free from other pillars so that empty spaces in-between pillars are created and light from a backlight positioned at a backside of the print medium (9) is able to traverse from the backside through the print medium and said empty spaces towards a viewpoint of an observer at the frontside of the print medium (9) opposite to the backside of the print medium (9) and the method comprises the step of specifying for each pillar a height (H) with respect to the surface, a cross-sectional width (W) of the pillar taken parallel to the plane of the surface, an angle of the pillar with respect to the plane of the surface, and at least one colour of the radiation curable marking material in order to establish a predetermined visual effect of the elevated structure, the predetermined visual effect intended to be sensed by the observer.

2. The method according to claim 1, wherein the predetermined visual effect varies with a position of the viewpoint of the observer relative to the surface.

3. The method according to claim 1 or 2, wherein the method comprises the step of dividing the surface into at least two parts and providing for each part a density of the pillars in said part in order to establish a relation between the size of an area occupied by the pillars in said part and a size of the empty spaces in-between the pillars in said part.

4. The method according to any of the previous claims, wherein the method comprises the step of dividing the surface into at least two parts and providing for each part a different specification of the pillars to be realized in said part.

5. The method according to any of the previous claims, wherein the method is executed by a scanning inkjet printer having a user interface, wherein the method comprises the steps of displaying on the user interface a selection list of predetermined visual effects, selecting a predetermined effect from the selection list and converting the selected predetermined visual effect into specifications of the pillars.

6. The method according to any of the previous claims, further comprising the steps of:
- selecting a structure height parameter corresponding to a height of the structures (S) after printing;
- comparing a droplet size parameter corresponding to a dimension of the to be applied droplets to the structure height parameter to determine a number of passes;
- defining a number of masks at least equal to the number of passes of a scanning printhead, wherein each mask defines a plurality of spaced apart structure formation areas, each structure formation area comprises at least one printing pixel and said structure formation area is surrounded by non-printing pixels, preferably wherein the masks are identical; and
- applying one of the mask per pass.

7. A scanning inkjet printer comprising:
- a translatable printhead carriage (2) translatable over a medium support surface (10) and comprising at least one printhead (11) comprising nozzles (12, 12A-12E) for jetting droplet of UV curable marking material onto a print medium (9) on the medium support surface (10);
- a curing station (14) configured for emitting UV radiation for curing marking material on the print medium (9) on the medium support surface (10);
- a controller configured for operating in an elevated structure print mode to:
- define a plurality of spaced apart structure formation areas on the print medium (9) with respect to the medium support surface (10);
- control the printhead (11) to jet at least one droplet (D) from the at least one nozzle (12, 12A-12E) onto each structure formation area during multiple passes of the printhead (11), wherein for every droplet (D) jetted onto a structure formation area, the position, velocity, and moving direction of each nozzle (12, 12A-E) with respect to a structure formation area when jetting a droplet (D) in said structure formation area are similar and/or the same, and to control the curing station (14) to cure the jetted droplets (D) during each pass of the printhead (11), such that in substantially each structure formation area a pillar is formed, wherein each pillar is positioned substantially free from other pillars so that empty spaces in-between pillars are created and light from a backlight positioned at a backside of the print medium (9) is able to traverse from the backside through the print medium and said empty spaces towards a viewpoint of an observer at the frontside of the print medium (9) opposite to the backside of the print medium (9), wherein the controller is configured to specify for each pillar a height (H) with respect to the medium support surface, a cross-sectional width (W) of the pillar taken parallel to the plane of the medium support surface, an angle of the pillar with respect to the plane of the medium support surface, and at least one colour of the radiation curable marking material in order to establish a predetermined visual effect of the formed pillars, the predetermined visual effect intended to be sensed by the observer.

8. A computer program comprising instructions which, when the program is executed by a computer, cause the computer to carry out the steps of the method of any of the claims 1 to 6.

9. A print medium with an elevated structure formed by performing the method according to any of the claims 1 to 6.
